# EUROPEAN PATENT SPECIFICATION

(11) **EP 4 073 132 B1**
(45) Date of publication and mention of the grant of the patent: **27.12.2023**
(21) Application number: 20821154.0
(22) Date of filing: 07.12.2020
(51) Int. Cl.: C04B 24/26, C04B 28/02, C04B 28/04, C08F 236/10, C08F 236/14, C08L 9/08

(54) **POLYMER LATEX FOR USE IN CONSTRUCTION APPLICATIONS**
POLYMERLATEX ZUR VERWENDUNG IN BAUANWENDUNGEN
LATEX POLYMÈRE POUR UNE UTILISATION DANS DES APPLICATIONS DE CONSTRUCTION

(30) Priority: 10.12.2019 GB 201918102
(43) Date of publication of application: 19.10.2022
(73) Proprietor: Synthomer Deutschland GmbH, 45768 Marl (DE)
(72) Inventor: BÖHM, Nicolai, 45768 Marl (DE); ARAUJO, Odair, 45768 Marl (DE)
(74) Representative: f & e patent
(86) International application number: PCT/EP2020/084785
(87) International publication number: WO 2021/115978

(56) References cited:
- WO-A1-94/05896
- JP-B2- 4 509 663
- US-A- 4 056 501
- US-A- 5 726 259
- US-A- 5 733 955
- US-A1- 2007 238 820
- US-B1- 6 809 148

## Description

The present invention relates to a polymer latex for use in construction applications and in particular, but not exclusively, the polymer latex is suitable for cementitious compositions and to construction materials in particular cementitious compositions comprising such polymer latex.

### Background of the invention

US 4,368,077 relates to a styrene butadiene-based latex and its use in the cementitious compositions. The SBR latex is prepared by emulsion polymerization with a weight ratio of styrene to butadiene of more than 1.5 in presence of N-methylolmethacrylamide, and an anionic surfactant.

WO 2003/27039 relates to SBR latices that can be used in gypsum-bonded wallboards. The SBR latex disclosed therein is preferably functionalized with 2-acrylamido-2-methylpropanesulfonic acid or salts thereof. In a preferred embodiment, the latex is polymerized from a monomer composition comprising 2 to 6 wt.% of 2-acrylamido-2-methylpropanesulfonic acid, 65 to 80 wt.% styrene, 15 to 13 wt.% butadiene, 0 to 3 wt.% hydroxyethyl acrylate, 0 to 10 wt.% acrylonitrile. Polymerization in presence of an anionic surfactant is disclosed. Non-ionic surfactants may additionally be present. But there is no disclosure with respect to the amount of non-ionic surfactants.

EP 1 024 154 discloses a styrene butadiene rubber to be used in cementitious compositions. The styrene to butadiene weight ratio is above 1.5 and acrylamidomethylpropane sulfonic acid is present in the seed for the polymerization of the latex. In the examples, anionic surfactants are used and hydroxyethyl acrylate can be present in an amount of 1.5 weight percent.

WO 2014/122031 relates to SBR latices that might be used in cementitious compositions and aims at the substitution of butadiene by esters of unsaturated carboxylic acids to reduce costs. The reference discloses core-shell latex particles, wherein the core comprises vinyl-aromatic compounds and esters of unsaturated carboxylic acids. Ethylenically unsaturated acids and other functional monomers might be present inter alia hydroxyalkyl acrylates. The shell comprises vinyl-aromatic monomers and conjugated dienes and up to 10 wt.% of additional monomers, for example, hydroxyalkyl acrylates. The general description is silent with respect to surfactants and their amounts. In the examples monomer compositions are employed containing no hydroxyalkyl acrylates and the amount of non-ionic surfactants is 0.33 wt.-% based on the total weight of monomers. None of the cited documents addresses improved properties of cementitious compositions that are imparted by the addition of a polymer latex such as spreading of the cementitious compositions, setting retardation and strength development. Thus, according to one aspect of the present invention it is an object of the present invention to provide a polymer latex that imparts an improved balance of properties to a cementitious composition containing said polymer latex like spreading, setting retardation and strength development. US6809148-B1 teaches a polymer latex comprising styrene/butadiene/ hydroxyethyl acrylate copolymers and non-ionic surfactants comprising a fatty alcohol ethoxylate with 8 ethoxy units.

### Summary of the invention

According to one aspect of the present invention this object has been surprisingly attained by a polymer latex obtained by aqueous emulsion polymerization of a mixture of ethylenically unsaturated monomers comprising
a) vinyl aromatic compounds;
b) conjugated dienes;
c) hydroxyalkyl esters of ethylenically unsaturated acids in an amount of 2 to 10 wt.-% based on the total weight of monomers; and
d) ethylenically unsaturated carboxylic acids or salts thereof in an amount of 0 to 0.15 wt.-% based on the total weight of monomers;
wherein the weight ratio of vinyl aromatic compounds to conjugated dienes is at least 1.3 : 1 and the polymer latex comprises 2 to 10 wt.-% based on total weight of monomers of non-ionic surfactants having a HLB of 17 to 19.

According to other aspects, the present invention relates to the use of said polymer latex in cementitious compositions and to cementitious compositions containing said polymer latex.

### Detailed description of the invention

### Monomer mixture:

The polymer latex of the present invention is obtained by aqueous emulsion polymerization of a mixture of ethylenically unsaturated monomers comprising
a) vinyl aromatic compounds;
b) conjugated dienes;
c) hydroxyalkyl esters of ethylenically unsaturated acids in an amount of 2 to 10 wt.-% based on the total weight of monomers; and
d) ethylenically unsaturated carboxylic acids in an amount of 0 to 0.15 wt.-% based on the total weight of monomers;
wherein the weight ratio of vinyl aromatic compounds to conjugated dienes is at least 1.3 : 1.

Representatives of vinyl-aromatic monomers include, for example, styrene, α-methylstyrene, vinyltoluene, o-methylstyrene, p- methylstyrene, p-tert-butylstyrene, 2,4-dimethylstyrene, 2-methylstyrene , 3-methylstyrene, 4-methylstyrene, 2-ethylstyrene, 3-ethylstyrene, 4-ethylstyrene, 2,4-diisopropylstyrene, 2,4-dimethylstyrene, 4-t-butylstyrene, 5-t-butyl-2-methylstyrene, 2- chlorostyrene, 3-chlorostyrene, 4 -chlorostyrene, 4-bromostyrene, 2-methyl-4,6-dichlorostyrene, 2,4-dibromostyrene, vinyl naphthalene, vinyltoluene and vinylxylene, 2-vinylpyridine, 4-vinylpyridine and 1,1- diphenylethylenes and substituted 1,1-diphenylethylenes , 1,2-diphenylethene and substituted 1,2-diphenylethylenes. Mixtures of one or more of the vinyl-aromatic compounds may also be used. The preferred monomers are styrene and α-methylstyrene, most preferred styrene. The vinyl-aromatic compounds can be used in a range of from 24 to 70 wt.-%, preferably from 38 to 65 wt.-%, more preferred from 40 to 60 wt.-%, based on the total weight of ethylenically unsaturated monomers. Thus, the vinyl-aromatic compound can be present in an amount of no more than 70 wt.-%, no more than 68 wt.-%, no more than 65 wt.-%, no more than 63 wt.-%, no more than 60 wt.-%, no more than 58 wt.-%, based on the total weight of ethylenically unsaturated monomers. The vinyl-aromatic compound can be present in an amount of at least 24 wt.-%, of at least 30 wt.-%, of at least 33 wt.-%, of at least 35 wt.-%, of at least 38 wt.-%, of at least 40 wt.-%, based on the total weight of ethylenically unsaturated monomers. The person skilled in the art will appreciate that any range defined by any of the above disclosed lower and upper limit is disclosed herewith.

Conjugated diene monomers suitable for the present invention include conjugated diene monomers, selected from 1,3-butadiene, isoprene, 2,3-dimethyl-1,3-butadiene, 2,3-dimethyl-1,3-butadiene, 2-chloro-1,3-butadiene, 1,3- pentadiene, 1,3-hexadiene, 2,4-hexadiene, 1,3-octadiene, 2-methyl-1,3-pentadiene, 2,3-dimethyl-1,3-pentadiene, 3,4-dimethyl-1,3-hexadiene, 2,3-diethyl-1,3-butadiene, 4,5-diethyl-1,3-octadiene, 3-butyl-1,3-octadiene, 3,7-dimethyl-1,3,6-octatriene, 2-methyl-6-methylene-1,7-octadiene, 7-methyl-3-methylene-1,6-octadiene, 1,3,7-octatriene, 2-ethyl-1,3-butadiene, 2-amyl-1,3-butadiene, 3,7-dimethyl-1,3,7- octatriene, 3,7-dimethyl-1,3,6-octatriene, 3,7,11- trimethyl-1,3,6,10-dodecatetraene , 7,11-dimethyl-3-methylene-1,6,10-dodecatriene, 2,6-dimethyl-2,4,6-octatriene, 2-phenyl-1,3-butadiene and 2-methyl-3-isopropyl-1,3-butadiene, 1,3-cyclohexadiene, myrcene, ocimene, and farnesene. 1,3-butadiene, isoprene and combinations thereof are the preferred conjugated dienes. 1,3-butadiene is the most preferred diene. Typically, the amount of conjugated diene monomer may range from 15 to 45 wt.-%, preferably from 20 to 40 wt.-%, more preferred from 24 to 39 wt.-%, based on the total weight of monomers. Thus, the conjugated diene may be present in amounts of at least 15 wt.-%, at least 20 wt.-%, at least 22 wt.-%, at least 24 wt.-%, based on the total weight of the ethylenically unsaturated monomers.

Accordingly, the conjugated diene monomers can be used in amounts of no more than 45 wt.-%, no more than 43 wt.-%, no more than 40 wt.-%, no more than 39 wt.-%, no more than 38 wt.-%, based on the total weight of the ethylenically unsaturated monomers. The person skilled in the art will appreciate that any range between any of the explicitly disclosed lower and upper limits is herein disclosed.

The weight ratio of vinyl aromatic compounds to conjugated dienes in the monomer mixture is at least 1.3 : 1, preferably at least 1.5 : 1, more preferred at least 1.6 : 1, even more preferred at least 1.8 : 1, even more preferred at least 1.9 : 1 and most preferred at least 2.0 : 1.

The hydroxyalkyl esters of ethylenically unsaturated acids which can be used to prepare the polymer latex according to the present invention include hydroxyalkyl acrylate and methacrylate monomers which are based on ethylene oxide, propylene oxide and higher alkylene oxides or mixtures thereof. Examples are hydroxyethyl acrylate, hydroxypropyl acrylate, hydroxyethyl methacrylate, hydroxypropyl methacrylate and hydroxybutyl acrylate. Preferably, the hydroxy alkyl(meth)acrylate monomer is 2-hydroxy ethyl(meth)acrylate or 2-hydroxy propyl(meth)acrylate. The hydroxy alkyl (meth)acrylate monomers are present in an amount of 2 to 10 wt.-%, preferably 2 to 9 wt.-%, more preferred 2 to 7 wt.-%, most preferred 2 to 6 wt based on the total weight of ethylenically unsaturated monomers.

The monomer mixture according to the present invention comprises 0.15 wt.-% at most, preferably 0.1 wt.-% at most, more preferably 0.05 wt.-% at most, even more preferably 0.01 wt.-% at most of ethylenically unsaturated carboxylic acids or salts thereof. It is most preferred that the monomer mixture is free of ethylenically unsaturated carboxylic acids and salts thereof.

The ethylenically unsaturated carboxylic acids or salts thereof if present at all may be selected from monocarboxylic acid and dicarboxylic acid monomers and their anhydrides and partial esters of polycarboxylic acids. Examples of monocarboxylic acid monomers include acrylic acid, methacrylic acid, crotonic acid and examples of dicarboxylic acid monomers include fumaric acid, itaconic acid, maleic acid, cis-cyclohexene-1,2-dicarboxylic acid, dimethylmaleic acid, bromomaleic acid, 2,3-dichloromaleic acid and (2-dodecen-1-yl) succinic acid. Examples of polycarboxylic acid partial esters include monomethyl maleate, monomethyl fumarate, monoethyl maleate, monoethyl fumarate, monopropyl maleate, monopropyl fumarate, monobutyl maleate, monobutyl fumarate, mono(2-ethyl hexyl) maleate, mono(2-ethyl hexyl) fumarate. Examples of other ethylenically unsaturated carboxylic acids include vinyl acetic acid, vinyl lactic acid and the salts thereof.

The monomer mixture according to the present invention optionally may further comprise e) ethylenically unsaturated monomers co-polymerizable with and different from monomers a) to d).

The ethylenically unsaturated monomers e) may be selected from
e1) ethylenically unsaturated sulfonic acids, preferably present in the monomer mixture in an amount of 0 to 10 wt.-%, preferred 0 to 6 wt.-%, more preferred 0 to 4 wt.-%, even more preferred 0 to 2 wt.-%, even more preferred 0 to 1 wt.-% based on the total weight of ethylenically unsaturated monomers.
e2) C1-C20 alkyl esters of acrylic or methacrylic acid preferably in an amount of 0 to 25 wt.-%, preferred 0 to 10 wt.-% based on the total weight of ethylenically unsaturated monomers; and
e3) ethylenically unsaturated nitrile compounds preferably in an amount of 0 to 15 wt.-%, preferred 0 to 10 wt.-% based on the total weight of ethylenically unsaturated monomers.

The ethylenically unsaturated sulfonic acids e1) are preferably selected from styrene sulfonic acid, vinyl sulfonic acid, allyl sulfonic acid, methallyl sulfonic acid, (meth)acrylic acid-3-sulfopropylester and 2-acrylamido-2-methylpropane sulfonic acid. It is most preferred that the monomer mixture according to the present invention is free of ethylenically unsaturated sulfonic acids.

Alkyl esters of ethylenically unsaturated acids e2) that can be used according to the present invention include n-alkyl esters, iso-alkyl esters or tert-alkyl esters of acrylic or (meth)acrylic acid in which the alkyl group has from 1 to 20 carbon atoms.

In general, the preferred alkyl esters of (meth)acrylic acids may be selected from C₁-C₁₀ alkyl (meth)acrylate, preferably C₁-C₈-alkyl (meth)acrylates. Examples of such acrylate monomers include n-butyl acrylate, secondary butyl acrylate, ethyl acrylate, hexyl acrylate, tert-butyl acrylate, 2-ethyl-hexyl acrylate, isooctyl acrylate, 4-methyl-2-pentyl acrylate, 2-methylbutyl acrylate, methyl methacrylate, butyl methacrylate, n-butyl methacrylate, isobutyl methacrylate, ethyl methacrylate, isopropyl methacrylate, hexyl methacrylate, cyclohexyl methacrylate and cetyl methacrylate. Methyl (meth)acrylate, ethyl (meth)acrylate, propyl (meth)acrylate, butyl (meth)acrylate, 2-ethylhexyl (meth)acrylate and combinations thereof are preferred.

Typically, the alkyl (meth)acrylate monomers can be present in an amount of no more than 25 wt.-%, no more than 23 wt.-%, no more than 20 wt.-%, no more than 18 wt.-%, no more than 16 wt.-%, no more than 14 wt.-%, no more than 12 wt.-%, no more than 10 wt.-%, no more than 8 wt.-%, no more than 6 wt.-%, no more than 4 wt.-%, no more than 2 wt.-%, or no more than 1 wt.-%, based on the total weight of ethylenically unsaturated monomers.

Unsaturated nitrile monomers e3) which can be used according to the present invention include polymerizable unsaturated aliphatic nitrile monomers which contain from 2 to 4 carbon atoms in a linear or branched arrangement, which may be substituted either by acetyl or additional nitrile groups. Such nitrile monomers include acrylonitrile, methacrylonitrile, alpha-cyanoethyl acrylonitrile, fumaronitrile and combinations thereof, with acrylonitrile being most preferred. These nitrile monomers can be included in amounts of no more than 15 wt.-%, no more than 14 wt.-%, no more than 12 wt.-%, no more than 10 wt.-%, no more than 8 wt.-%, no more than 6 wt.-%, no more than 4 wt.-%, no more than 2 wt.-%, or no more than 1 wt.-%, based on the total weight of ethylenically unsaturated monomers.

According to the present invention it is preferred that the polymer latex does not comprise core/shell particles.

### Method for the preparation of the polymer latex of the present invention:

The latex polymer (I) according to the present invention can be made by any emulsion polymerization process known to a person skilled in the art, provided that the monomer mixture as herein defined is employed. Particularly suitable is the process as described in EP-A 792 891.

In the emulsion polymerization for preparing the polymer latex of the present invention a seed latex may be employed. The seed latex is preferably separately prepared and the emulsion polymerization is conducted in the presence of the separately prepared seed latex. The seed latex particles are preferably present in an amount of 0.01 to 10, preferably 1 to 5 parts by weight, based on 100 parts by weight of total ethylenically unsaturated monomers employed in the polymer latex including those for making the seed particles, such as the oxirane-functional latex particles (b). The lower limit of the amount of seed latex particles therefore can be 0.01, 0.05, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, or 2.5 parts by weight. The upper limit of the amount can be 10, 9, 8, 7, 6, 5.5, 5, 4.5, 4, 3.8, 3.6, 3.4, 3.3, 3.2, 3.1 or 3 parts by weight. A person skilled in the art will understand that any range formed by any of the explicitly disclosed lower limits and upper limits is explicitly encompassed in the present specification.

The process for the preparation of the above-described latex polymer (I) can be performed at temperatures of from 0 to 130 °C, preferably of from 0 to 100 °C, particularly preferably of from 10 to 95 °C, very particularly preferably of from 20 to 90 °C, in the presence of no or one or more emulsifiers, no or one or more colloids and one or more initiators. The temperature includes all values and sub-values therebetween, especially including 5, 10, 15, 20, 25, 30, 35, 40, 45, 50, 55, 60, 65, 70, 75, 80, 85, 90, 95, 100, 105, 110, 115, 120 and 125 °C.

Initiators which can be used when carrying out the present invention include watersoluble and/or oil-soluble initiators which are effective for the purposes of the polymerization. Representative initiators are well known in the technical area and include, for example: azo compounds (such as, for example, AIBN, AMBN and cyanovaleric acid) and inorganic peroxy compounds, such as hydrogen peroxide, sodium, potassium and ammonium peroxydisulfate, peroxycarbonates and peroxyborates, as well as organic peroxy compounds, such as alkyl hydroperoxides, dialkyl peroxides, acyl hydroperoxides, and diacyl peroxides, as well as esters, such as tertiary butyl perbenzoate and combinations of inorganic and organic initiators.

The initiator is used in a sufficient amount to initiate the polymerization reaction at a desired rate. In general, an amount of initiator of from 0.01 to 5, preferably of from 0.1 to 4 %, by weight, based on the weight of the total polymer, is sufficient. The amount of initiator is most preferably of from 0.01 to 2% by weight, based on the total weight of the polymer. The amount of initiator includes all values and sub-values therebetween, especially including 0.01, 0.1, 0.5, 1, 1.5, 2, 2.5, 3, 4 and 4.5 % by weight, based on the total weight of the polymer.

The above-mentioned inorganic and organic peroxy compounds may also be used alone or in combination with one or more suitable reducing agents, as is well known in the art. Examples of such reducing agents which may be mentioned are sulfur dioxide, alkali metal disulfites, alkali metal and ammonium hydrogen sulfites, thiosulfates, dithionites and formaldehyde sulfoxylates, as well as hydroxylamine hydrochloride, hydrazine sulfate, iron (II) sulfate, cuprous naphthanate, glucose, sulfonic acid compounds such as sodium methane sulfonate, amine compounds such as dimethylaniline and ascorbic acid. More preferred is the use of a proprietary sodium salt of an organic sulfinic acid derivative, such as Bruggolite^{®} FF6 or Bruggolite^{®} FF6M. The quantity of the reducing agent is preferably 0.03 to 10 parts by weight per part by weight of the polymerization initiator.

Surfactants or emulsifiers which are suitable for stabilizing the latex particles include those conventional surface-active agents for polymerization processes. The surfactant or surfactants can be added to the aqueous phase and/or the monomer phase. An effective amount of surfactant in a seed process is the amount which was chosen for supporting the stabilization of the particle as a colloid, the minimization of contact between the particles and the prevention of coagulation. In a non-seeded process, an effective amount of surfactant is the amount which was chosen for influencing the particle size.

Since the polymer latex of the present invention contains 2 to 10 wt.-% based on the total weight of ethylenically unsaturated monomers of non-ionic surfactants having a HLB of 17 to 19 such amounts of non-ionic surfactants may be employed in the emulsion polymerization process. Of course, it is also possible to use no or only a fraction of the total required amount of non-ionic surfactants in the emulsion polymerization process and to add the remaining amount to the final polymer latex after termination of the emulsion polymerization process. Post reaction addition of the non-ionic surfactant is preferred.

Suitable non-ionic surfactants having a HLB of 17 to 19 may be selected from alkyl ethoxylates, alkyl phenol ethoxylates, fatty acid ethoxylates, ethylene glycol-propylene glycol block copolymers or tristryryl phenol ethoxylates. Preferred non-ionic surfactants have a HLB value of 17 to 18.5, more preferred 17 to 18. The HLB value is calculated as the quotient of the molar mass of the hydrophilic part of the surfactant and the total molar mass of the surfactant multiplied by 20. The non-ionic surfactants are present in the polymer latex of the present invention in an amount of 2 to 10 wt.-%, preferably 2 to 8 wt.-%, more preferred 2 to 7 wt.-% based on the total weight of ethylenically unsaturated monomers.

Accordingly, the amount of non-ionic surfactants in the polymer latex of the present invention is at least 2 wt.-% or may be at least 2.5 wt.-%, at least 3 wt.-%, at least 3.5 wt.-%, at least 4 wt.-%, at least 4.5 wt.-%, or at least 5 wt.-% based on the total weight of ethylenically unsaturated monomers. The amount of non-ionic surfactants in the polymer latex of the present invention is at most 10 wt.-% or may be at most 9,5 wt.-%, at most 9 wt.-%, at most 8.5 wt.-%, at most 8 wt.-%, at most 7.5 wt.-%, at most 7 wt.-%, at most 6.5 wt.-%, at most 6 wt.-% based on the total weight of ethylenically unsaturated monomers. The person skilled in the art will appreciate that all ranges formed by any of the above defined limits are disclosed herewith.

Optionally in addition to the non-ionic surfactants also anionic surfactants might be employed. Representative anionic surfactants include saturated and ethylenically unsaturated sulfonic acids or salts thereof, including, for example, unsaturated hydrocarbonsulfonic acid, such as vinylsulfonic acid, allylsulfonic acid and methallylsulfonic acid, and salts thereof; aromatic hydrocarbon acids, such as, for example, p-styrenesulfonic acid, isopropenylbenzenesulfonic acid and vinyloxybenzenesulfonic acid and salts thereof; sulfoalkyl esters of acrylic acid and methacrylic acid, such as, for example, sulfoethyl methacrylate and sulfopropyl methacrylate and salts thereof, and 2-acrylamido-2-methylpropanesulfonic acid and salts thereof; alkylated diphenyl oxide disulfonates, sodium dodecylbenzenesulfonates and dihexyl esters of sodium sulfosuccinate, Sodium alkyl esters of sulfonic acid, ethoxylated alkylphenols and ethoxylated alcohols; fatty alcohol (poly)ethersulfates. The presence of anionic surfactants during the polymerization process might be advantageous to support process stability and latex stability.

Various protective colloids can also be used instead of or in addition to the surfactants described above. Suitable colloids include polyhydroxy compounds, such as partially acetylated polyvinyl alcohol, casein, hydroxyethyl starch, carboxymethylcellulose, hydroxyethylcellulose, hydroxypropylcellulose, polysaccharides, and degraded polysaccharides polyethylene glycol and gum arabic. The preferred protective colloids are carboxymethylcellulose, hydroxyethylcellulose and hydroxypropylcellulose. In general, these protective colloids are used in contents of from 0 to 10, preferably from 0 to 5, more preferably from 0 to 2 parts by weight, based on the total weight of the monomers. The amount of protective colloids includes all values and sub-values therebetween, especially including 1, 2, 3, 4, 5, 6, 7, 8 and 9 wt.-%, based on the total weight of the monomers.

It is frequently advisable to perform the emulsion polymerization additionally in the presence of buffer substances and chelating agents. Suitable substances are, for example, alkali metal carbonates and hydrogen carbonates, alkali metal phosphates and pyrophosphates (buffer substances) and the alkali metal salts of ethylenediaminetetraacetic acid (EDTA) or hydroxyl-2-ethylenediaminetriacetic acid (HEEDTA) as chelating agents. The quantity of buffer substances and chelating agents is usually 0.001-1.0 wt.-%, based on the total quantity of monomers.

Furthermore, it may be advantageous to use chain transfer agents (regulators) in emulsion polymerization. Typical agents are, for example, organic sulfur compounds, such as thioesters, 2-mercaptoethanol, 3-mercaptopropionic acid, iso-octyl-3-mercaptopropionat, and C₁-C₁₂ alkyl mercaptans, n-dodecylmercaptan and t-dodecylmercaptan being preferred. The quantity of chain transfer agents, if present, is usually 0.05-3.0 wt.-%, preferably 0.2-2.0 wt.-%, based on the total weight of the used monomers.

### Polymer latex:

The polymer latex of the present invention is prepared by aqueous emulsion polymerization using a monomer mixture as described above. If not already used in sufficient amounts in the emulsion polymerization non-ionic surfactants including the described preferred surfactants may be added to the polymer latex obtained from the emulsion polymerization to provide the required amount(s) of non-ionic surfactants as described above including the preferred amounts.

Various other additives and ingredients can be added in order to prepare the polymer latex of the present invention. Such additives include, for example: antifoams, wetting agents, thickeners, plasticizers, fillers, pigments, dispersants, optical brighteners, antioxidants, biocides and metal chelating agents. Known antifoams include silicone oils and acetylene glycols. Customary known wetting agents include alkylphenol ethoxylates, alkali metal dialkyl sulfosuccinates, acetylene glycols and alkali metal alkyl sulfate. Typical thickeners include polyacrylates, polyacrylamides, xanthan gums, modified celluloses, micro- or nano-cellulose fibers, associative thickeners of the polyurethane type or particulate thickeners, such as silicas and clays. Typical plasticizers include mineral oil, liquid polybutenes, liquid polyacrylates, polyalkylene glycols such as polypropylene glycol or polybutylene glycol, carboxylic acid esters like alkyl esters of e.g. adipic, citric, phthalic, terephthalic, isophthalic or trimellitic acid and lanolin. Titanium dioxide (TiO₂), calcium carbonate and clay are the fillers typically used.

### Construction materials:

The polymer latex of the present invention may by employed in construction material in particular in applications wherein the setting behavior of the construction material may be influenced by the polymer latex of the present invention.

The polymer latex of the present invention is suitable in particular, to impart an improved balance of properties to construction material, preferably cementitious compositions. Cementitious composition according to the present invention may be selected from concrete, cement based construction materials, for example screed, tile adhesives or cement based interfacial agents, and mortars for example bricklaying mortars, plaster mortars, repair mortars, waterproofing mortars, self-leveling mortars, exterior thermal insulation adhesive mortars, decorative mortars, thermal insulation mortars, or flooring mortars.

The polymer to cement ratio by weight used in these cementitious compositions is 0.02 to 0.4, mostly 0.05 to 0.2.

The cementitious composition may contain the customary components present in the respective cementitious compositions depending on the desired end use in customary amounts.

Typical compounds used in such cementitious systems beside water are ordinary Portland cement, special Portland cements, high alumina cements and blended cements, fine and coarse aggregates such as river sands, gravels, crushed sands and stones, silica sands and fly ash. For achieving desired colours pigments may be added. For reinforcing the cementitious system natural, synthetic, glass, carbon and metal fibers can be added. Additives may be added for tuning processing or mechanical properties. Examples are plasticizers or superplasticizers, flow agents, setting accelerators, setting retarders, defoamers, air-entraining agents.

Other suitable applications of the polymer latex of the present invention are filler materials for bricks, glass or metals.

The invention will now be illustrated in more detail with reference to following examples.

### Examples

The polymer latex compositions used in the examples and comparative examples were produced by a free radical emulsion polymerization combining an initial charge and a feed. 1.2 parts by weight based on total monomers (in the following pphm) of a polystyrene seed with an average particle size of 36 nm were used in the initial charge together with water (30 pphm) and HEEDTA as a complexing agent (0.05 pphm). After heating the initial charge to 85 °C under continuous stirring the polymerization reaction was initiated by starting a feed of ammonium persulfate (1 pphm). The temperature was maintained constantly at 85 °C. 10 minutes after persulfate feed start the monomers according to table 1, the anionic surfactant (0.5 pphm of C₁₃-C₁₅ alkyl aryl sulfonate), 0.8 parts of t-dodecyl mercaptane as a chain transfer agent and water were added to the reactor over a period of six hours with a constant feed rate. Thereafter, a post activation with 0.25 pphm ammonium persulfate to reduce the residual monomers was started and continued for three hours. The product was cooled to ambient temperature, sieved over a filter cloth with 50 µm mesh width and the pH was adjusted to 7.5 using a 10 % aqueous sodium hydroxide solution. Then non-ionic surfactant according to table 1 was added and homogenized for five minutes. The total solids content of the final latex was adjusted to 50 wt.-% and the final pH to 8.5 with sodium hydroxide solution.

The particle size of the latexes was between 155 and 160 nm, determined with a Mastersizer 2000, Malvern.

The latexes according to table 1 were used for the preparation of polymer modified cement mortars. For each mortar 900 g of CEM I 32.5 Portland cement (Schwenk) were mixed with 1350 g norm sand according to EN 196. Prior to use 0.6 % defoamer Tego Antifoam 2-89 (Evonik) was added to the latexes. The test mortars were prepared with water and latex resulting in a polymer-cement ratio of 0.075 (dry on dry) and water-cement ratio of 0.38 (in total 342 g water and 67.5 g polymer) by thorough mixing in a planetary mixer (Hobart N50) equipped with a stirrer blade for 1 minute at 140 rpm followed by 1 minute at 280 rpm.

With the mortars the density according to DIN EN 196-1:2016-11, the slump behaviour according to DIN EN 1015-3:200-5 immediately, after 20, 40 and 60 minutes after mixing and compressive as well as flexural strength after 48 hours, 7 days and 28 days were determined according to DIN EN 196-1:2016-11.

The target values were:
Mortar density > 2 g/mL. Slump test immediately: >16 cm, after 20 minutes: >14 cm, after 40 minutes: >13 cm, after 60 minutes: >12 cm. Compressive strength after 48 h: >4.5 MPa, after 7 days: >6 MPa, after 28 days: >8.5 MPa. Flexural strength after 48 hours: > 18 MPa, after 7 days: > 25 MPa, after 28 days: > 35 MPa.

The results are listed in table 2.

| **Table 1** | | **Examples** | | | | | | **Comparative examples** | | | | | |
|---|---|---|---|---|---|---|---|---|---|---|---|---|---|
| | | **1** | **2** | **3** | **4** | **5** | **6** | **7** | **8** | **9** | **10** | **11** | **12** |
| **Monomers (parts per hundred monomers = pphm)** | | | | | | | | | | | | | |
| Styrene | | 62 | 63 | 62 | 58 | 62 | 63 | 53 | 62 | 62 | 62 | 62 | 62 |
| Butadiene | | 34 | 35 | 34 | 38 | 34 | 35 | 43 | 34 | 34 | 34 | 34 | 34 |
| HEMA | | 4 | 2 | 3.7 | 4 | 4 | 2 | 4 | 0 | 4 | 4 | 4 | 4 |
| Acrylic acid | | 0 | 0 | 0.3 | 0 | 0 | 0 | 0 | 4 | 0 | 0 | 0 | 0 |
| S:B ratio | | 1.82 | 1.80 | 1.82 | 1.53 | 1.82 | 1.80 | 1.23 | 1.82 | 1.82 | 1.82 | 1.82 | 1.82 |

| **Non-ionic surfactant (parts on solid polymer) alkyl ethoxylate type** | **HLB value** | | | | | | | | | | | | |
|---|---|---|---|---|---|---|---|---|---|---|---|---|---|
| linear C11 alkyl / 11 EO units | 15.9 | | | | | | | | | 5 | | | |
| linear C11 alkyl / 21 EO units | 16.9 | | | | | | | | | | 5 | | |
| linear C11 alkyl / 28 EO units | 17.5 | 5 | 5 | 5 | 5 | | 2.5 | 5 | 5 | | | | 1.8 |
| branched C13 alkyl / 40 EO units | 18.0 | | | | | 5 | | | | | | | |
| branched C13 alkyl / 100 EO units | 19.1 | | | | | | | | | | | 5 | |

| **Table 2** | | **Examples** | | | | | | **Comparative examples** | | | | | |
|---|---|---|---|---|---|---|---|---|---|---|---|---|---|
| | | **1** | **2** | **3** | **4** | **5** | **6** | **7** | **8** | **9** | **10** | **11** | **12** |
| **Slump value [cm]** | initial | 16 | 16 | 16 | 16 | 15 | 15 | 15 | no flow | 10 | 14 | 12 | 13 |
| DIN EN 1015-3:2007-05 | 20 minutes | 15 | 15 | 14 | 15 | 15 | 14 | 14 | no flow | no flow | 12 | 10 | 10 |
| | 40 minutes | 15 | 14 | 13 | 15 | 13 | 13 | 13 | no flow | no flow | no flow | no flow | no flow |
| | 60 minutes | 14 | 13 | 12 | 14 | 12 | 12 | 13 | no flow | no flow | no flow | no flow | no flow |
| **Mortar density [g/mL]** | | 2.11 | 2.16 | 2.07 | 2.18 | 2.11 | 1.96 | 2.15 | 1.77 | 1.82 | 1.95 | 2.05 | 1.79 |
| DIN EN 1015-6:2007-05 | | | | | | | | | | | | | |
| **Compressive strength [MPa]** | 48 hours | 5.3 | 5.1 | 5.4 | 4.8 | 5.3 | 4.4 | 3.1 | 5.8 | 5.3 | 5.6 | 5.0 | 5.7 |
| DIN EN 196-1:2016-11 | 7 days | 6.4 | 6.4 | 6.8 | 6.6 | 6.7 | 6.2 | 5.8 | 7.0 | 6.4 | 6.5 | 6.3 | 6.2 |
| | 28 days | 9.2 | 9.3 | 9.8 | 8.9 | 9.2 | 9.5 | 8.5 | 9.6 | 9.4 | 9.3 | 9.0 | 8.9 |
| **Flexural strength [MPa]** | 48 hours | 20.4 | 20.8 | 19.8 | 18.9 | 19.5 | 17.8 | 10.8 | 19.4 | 20.2 | 20.7 | 19.9 | 19.1 |
| DIN EN 196-1:2016-11 | 7 days | 27.7 | 28.2 | 27.9 | 28.5 | 27.3 | 26.9 | 25.4 | 28.2 | 27.2 | 28.2 | 28.5 | 27.4 |
| | 28 days | 39.6 | 41.2 | 40.3 | 39.1 | 40.8 | 38.9 | 37.3 | 39.5 | 40.6 | 41.4 | 38.9 | 39.0 |

## Claims

1. A polymer latex obtained by aqueous emulsion polymerization of a mixture of ethylenically unsaturated monomers comprising
a) vinyl aromatic compounds;
b) conjugated dienes;
c) hydroxyalkyl esters of ethylenically unsaturated acids in an amount of 2 to 10 wt.-% based on the total weight of monomers; and
d) ethylenically unsaturated carboxylic acids or salts thereof in an amount of 0 to 0.15 wt.-% based on the total weight of monomers;
wherein the weight ratio of vinyl aromatic compounds to conjugated dienes is at least 1.3 : 1 and the polymer latex comprises 2 to 10 wt.-% based on total weight of monomers of non-ionic surfactants having an HLB of 17 to 19.

2. The polymer latex of claim 1, wherein the vinyl aromatic compounds are selected from styrene, alpha-methyl styrene, 4-methyl styrene, alpha-chloro styrene, 4-chloro styrene, divinylbenzene, 4-methoxy-3-methylstyrene, 3,4-dimethyl-alphamethylstyrene and combinations thereof, preferably the vinyl aromatic compound is styrene.

3. The polymer latex of any of the preceding claims, wherein the vinyl aromatic compounds are present in the monomer mixture in an amount of 24 to 70 wt-%, preferred 38 to 65 wt.-% based on the total weight of ethylenically unsaturated monomers.

4. The polymer latex of any of the preceding claims, wherein the conjugated dienes are selected from 1,3-butadiene, 2-chloro-1,3-butadiene, isoprene, conjugated straight-chain and branched pentadienes and hexadienes; and combinations thereof, preferably the conjugated diene monomer is 1,3-butadiene.

5. The polymer latex of any of the preceding claims, wherein the conjugated dienes are present in the monomer mixture in an amount of 16 to 45 wt-%, preferred 24 to 39 wt.-% based on the total weight of ethylenically unsaturated monomers.

6. The polymer latex of any of the preceding claims, wherein the hydroxyalkyl esters of ethylenically unsaturated acids are selected from 2-hydroxyethyl (meth)acrylate and 2-hydroxypropyl (meth)acrylate.

7. The polymer latex of any of the preceding claims, wherein the hydroxyalkyl esters of ethylenically unsaturated acids are present in the monomer mixture in an amount of 2 to 9 wt-%, preferred 2 to 7 wt.-% based on the total weight of ethylenically unsaturated monomers.

8. The polymer latex of any of the preceding claims, wherein the monomer mixture comprises 0.1 wt.-% at most, preferably 0.05 wt.-% at most, more preferably 0.01 wt.-% at most of ethylenically unsaturated carboxylic acids and salts thereof and most preferably is free of ethylenically unsaturated carboxylic acids and salts thereof.

9. The polymer latex of any of the preceding claims, wherein the monomer mixture further comprises e) ethylenically unsaturated monomers co-polymerizable with and different from monomers a) to d).

10. The polymer latex of any of the preceding claims, wherein ethylenically unsaturated monomers e) are selected from
e1) ethylenically unsaturated sulfonic acids, preferably selected from styrene sulfonic acid, vinyl sulfonic acid, allyl sulfonic acid, methallyl sulfonic acid, (meth)acrylic acid-3-sulfopropylester and 2-acrylamido-2-methylpropane sulfonic acid, preferably present in the monomer mixture in an amount of 0 to 10 wt.-%, preferred 0 to 6 wt.-% based on the total weight of ethylenically unsaturated monomers;
e2) C1-C20 alkyl esters of acrylic or methacrylic acid preferably in an amount of 0 to 25 wt.-%, preferred 0 to 10 wt.-% based on the total weight of ethylenically unsaturated monomers; and
e3) ethylenically unsaturated nitrile compounds preferably in an amount of 0 to 15 wt.-%, preferred 0 to 10 wt.-% based on the total weight of ethylenically unsaturated monomers.

11. The polymer latex of any of the preceding claims, wherein the non-ionic surfactants are selected from alkyl ethoxylates, alkyl phenol ethoxylates, fatty acid ethoxylates, ethylene glycol-propylene glycol block copolymers or tristryryl phenol ethoxylates, and/or the non-ionic surfactants have a HLB value of 17 to 18.5, preferably 17 to 18 and/or the non-ionic surfactants are present in the polymer latex in an amount of 2 to 9 wt.-%, preferably 2 to 8 wt.-%, more preferred 2 to 7 wt.-% based on the total weight of ethylenically unsaturated monomers.

12. The polymer latex of any of the preceding claims, further comprising anionic surfactants.

13. The polymer latex of any of the preceding claims, wherein the polymer latex does not comprise core/shell particles.

14. A construction material, preferably a cementitious composition comprising the polymer latex of any of claims 1 to 13.

15. Use of the polymer latex of any of claims 1 to 13 in construction materials, preferably cementitious compositions.

## Patentansprüche

1. Ein Polymerlatex, erhalten durch wässrige Emulsionspolymerisation einer Mischung von ethylenisch ungesättigten Monomeren, umfassend
a) vinylaromatische Verbindungen;
b) konjugierte Diene;
c) Hydroxyalkylester von ethylenisch ungesättigten Säuren in einer Menge von 2 bis 10 Gew.-%, bezogen auf das Gesamtgewicht der Monomere; und
d) ethylenisch ungesättigte Carbonsäuren oder deren Salze in einer Menge von 0 bis 0,15 Gew.-%, bezogen auf das Gesamtgewicht der Monomere;
wobei das Gewichtsverhältnis von vinylaromatischen Verbindungen zu konjugierten Dienen mindestens 1,3:1 beträgt und der Polymerlatex 2 bis 10 Gew.-%, bezogen auf das Gesamtgewicht der Monomere, an nichtionischen Tensiden mit einem HLB-Wert von 17 bis 19 enthält.

2. Der Polymerlatex nach Anspruch 1, wobei die vinylaromatischen Verbindungen ausgewählt sind aus Styrol, alpha-Methylstyrol, 4-Methylstyrol, alpha-Chlorstyrol, 4-Chlorstyrol, Divinylbenzol, 4-Methoxy-3-methylstyrol, 3,4-Dimethyl-alpha-methylstyrol und Kombinationen davon, wobei die vinylaromatische Verbindung vorzugsweise Styrol ist.

3. Der Polymerlatex nach einem der vorhergehenden Ansprüche, wobei die vinylaromatischen Verbindungen in der Monomermischung in einer Menge von 24 bis 70 Gew.-%, vorzugsweise 38 bis 65 Gew.-%, bezogen auf das Gesamtgewicht der ethylenisch ungesättigten Monomere, vorhanden sind.

4. Der Polymerlatex nach einem der vorhergehenden Ansprüche, wobei die konjugierten Diene ausgewählt sind aus 1,3-Butadien, 2-Chlor-1,3-butadien, Isopren, konjugierten geradkettigen und verzweigten Pentadienen und Hexadienen und Kombinationen davon, wobei das konjugierte Dienmonomer vorzugsweise 1,3-Butadien ist.

5. Der Polymerlatex nach einem der vorhergehenden Ansprüche, wobei die konjugierten Diene in der Monomermischung in einer Menge von 16 bis 45 Gew.-%, bevorzugt 24 bis 39 Gew.-%, bezogen auf das Gesamtgewicht der ethylenisch ungesättigten Monomere, vorhanden sind.

6. Der Polymerlatex nach einem der vorhergehenden Ansprüche, wobei die Hydroxyalkylester von ethylenisch ungesättigten Säuren ausgewählt sind aus 2-Hydroxyethyl(meth)acrylat und 2-Hydroxypropyl(meth)acrylat.

7. Der Polymerlatex nach einem der vorhergehenden Ansprüche, wobei die Hydroxyalkylester ethylenisch ungesättigter Säuren in der Monomermischung in einer Menge von 2 bis 9 Gew.-%, bevorzugt 2 bis 7 Gew.-%, bezogen auf das Gesamtgewicht der ethylenisch ungesättigten Monomere, vorhanden sind.

8. Der Polymerlatex nach einem der vorhergehenden Ansprüche, wobei die Monomermischung höchstens 0,1 Gew.-%, vorzugsweise höchstens 0,05 Gew.-%, noch bevorzugter höchstens 0,01 Gew.-% ethylenisch ungesättigte Carbonsäuren und deren Salze enthält und am meisten bevorzugt frei von ethylenisch ungesättigten Carbonsäuren und deren Salzen ist.

9. Der Polymerlatex nach einem der vorhergehenden Ansprüche, wobei die Monomermischung zudem e) ethylenisch ungesättigte Monomere umfasst, die mit den Monomeren a) bis d) co-polymerisierbar und von diesen verschieden sind.

10. Der Polymerlatex nach einem der vorhergehenden Ansprüche, wobei die ethylenisch ungesättigten Monomere e) ausgewählt sind aus
e1) ethylenisch ungesättigten Sulfonsäuren, vorzugsweise ausgewählt aus Styrolsulfonsäure, Vinylsulfonsäure, Allylsulfonsäure, Methallylsulfonsäure, (Meth)acrylsäure-3-sulfopropylester und 2-Acrylamido-2-methylpropansulfonsäure, vorzugsweise vorhanden in der Monomermischung in einer Menge von 0 bis 10 Gew.-%, bevorzugt 0 bis 6 Gew.-%, bezogen auf das Gesamtgewicht der ethylenisch ungesättigten Monomere;
e2) C1-C20-Alkylestern der Acryl- oder Methacrylsäure, vorzugsweise in einer Menge von 0 bis 25 Gew.-%, bevorzugt 0 bis 10 Gew.-%, bezogen auf das Gesamtgewicht der ethylenisch ungesättigten Monomere; und
e3) ethylenisch ungesättigten Nitrilverbindungen, vorzugsweise in einer Menge von 0 bis 15 Gew.-%, bevorzugt 0 bis 10 Gew.-%, bezogen auf das Gesamtgewicht der ethylenisch ungesättigten Monomere.

11. Der Polymerlatex nach einem der vorhergehenden Ansprüche, wobei die nichtionischen Tenside ausgewählt sind aus Alkylethoxylaten, Alkylphenolethoxylaten, Fettsäureethoxylaten, Ethylenglykol-Propylenglykol-Blockcopolymeren oder Tristryrylphenolethoxylaten, und/oder die nichtionischen Tenside einen HLB-Wert von 17 bis 18,5, vorzugsweise 17 bis 18, aufweisen und/oder die nichtionischen Tenside in dem Polymerlatex in einer Menge von 2 bis 9 Gew. %, vorzugsweise 2 bis 8 Gew.-%, bevorzugter 2 bis 7 Gew.-%, bezogen auf das Gesamtgewicht der ethylenisch ungesättigten Monomere vorhanden sind.

12. Der Polymerlatex nach einem der vorhergehenden Ansprüche, des Weiteren enthaltend anionische Tenside.

13. Der Polymerlatex nach einem der vorhergehenden Ansprüche, wobei der Polymerlatex keine Kern/Schale-Partikel umfasst.

14. Ein Baumaterial, vorzugsweise eine zementhaltige Zusammensetzung, enthaltend den Polymerlatex nach einem der Ansprüche 1 bis 13.

15. Die Verwendung des Polymerlatex nach einem der Ansprüche 1 bis 13 in Baumaterialien, vorzugsweise in zementhaltigen Zusammensetzungen.

## Revendications

1. Latex de polymères obtenu par polymérisation en émulsion, en milieu aqueux, d'un mélange de monomères à insaturation éthylénique comprenant :
a) des composés vinyl-aromatiques,
b) des diènes conjugués,
c) des esters d'hydroxy-alkyle d'acides à insaturation éthylénique, en une proportion de 2 à 10 %, en poids rapporté au poids total des monomères,
d) et des acides carboxyliques à insaturation éthylénique ou des sels de tels acides, en une proportion de 0 à 0,15 %, en poids rapporté au poids total des monomères,
dans lequel le rapport pondéral des composés vinyl-aromatiques aux diènes conjugués vaut au moins 1,3/1, et lequel latex de polymères contient de 2 à 10 %, en poids rapporté au poids total des monomères, de tensioactifs non-ioniques présentant un indice HLB de 17 à 19.

2. Latex de polymères conforme à la revendication 1, pour lequel les composés vinyl-aromatiques sont choisis parmi les styrène, alpha-méthyl-styrène, 4-méthyl-styrène, alpha-chloro-styrène, 4-chloro-styrène, divinyl-benzène, 4-méthoxy-3-méthyl-styrène, 3,4-diméthyl-alpha-méthyl-styrène et leurs combinaisons, et de préférence, le composé vinyl-aromatique est du styrène.

3. Latex de polymères conforme à l'une des revendications précédentes, pour lequel les composés vinyl-aromatiques se trouvent présents, dans le mélange de monomères, en une proportion de 24 à 70 % en poids, et de préférence de 38 à 65 % en poids, par rapport au poids total des monomères à insaturation éthylénique.

4. Latex de polymères conforme à l'une des revendications précédentes, pour lequel les diènes conjugués sont choisis parmi les buta-1,3-diène, 2-chloro-buta-1,3-diène, isoprène, pentadiènes et hexa-diènes conjugués à chaîne linéaire ou ramifiée, et leurs combinaisons, et de préférence, le monomère diène conjugué est du buta-1,3-diène.

5. Latex de polymères conforme à l'une des revendications précédentes, pour lequel les diènes conjugués se trouvent présents, dans le mélange de monomères, en une proportion de 16 à 45 % en poids, et de préférence de 24 à 39 % en poids, par rapport au poids total des monomères à insaturation éthylénique.

6. Latex de polymères conforme à l'une des revendications précédentes, pour lequel les esters d'hydroxy-alkyle d'acides à insaturation éthylénique sont choisis parmi les (méth)acrylate de 2-hydroxy-éthyle et (méth)acrylate de 2-hydroxy-propyle.

7. Latex de polymères conforme à l'une des revendications précédentes, pour lequel les esters d'hydroxy-alkyle d'acides à insaturation éthylénique se trouvent présents, dans le mélange de monomères, en une proportion de 2 à 9 % en poids, et de préférence de 2 à 7 % en poids, par rapport au poids total des monomères à insaturation éthylénique.

8. Latex de polymères conforme à l'une des revendications précédentes, pour lequel le mélange de monomères comprend au plus 0,1 % en poids, de préférence au plus 0,05% en poids et mieux encore au plus 0,01 % en poids, d'acides carboxyliques à insaturation éthylénique et de sels de tels acides, et surtout, ne contient pas d'acides carboxyliques à insaturation éthylénique et de sels de tels acides,

9. Latex de polymères conforme à l'une des revendications précédentes, pour lequel le mélange de monomères comprend en outre e) des monomères à insaturation éthylénique différents des monomères (a) à (d), mais copolymérisables avec eux.

10. Latex de polymères conforme à l'une des revendications précédentes, pour lequel les monomères à insaturation éthylénique (e) sont choisis parmi
e1) les acides sulfoniques à insaturation éthylénique, de préférence choisis parmi les suivants : acide styrène-sulfonique, acide vinyl-sulfonique, acide allyl-sulfonique, acide méthallyl-sulfonique, ester de 3-sulfo-propyle de l'acide (méth)acrylique, et acide 2-acrylamido-2-méthyl-propanesulfonique, qui se trouvent de préférence présents, dans le mélange de monomères, en une proportion de 0 à 10 % en poids, et de préférence de 0 à 6 % en poids, par rapport au poids total des monomères à insaturation éthylénique,
e2) les esters d'alkyle en C₁-C₂₀ de l'acide acrylique ou de l'acide méthacrylique, de préférence présents en une proportion de 0 à 25 % en poids, et de préférence de 0 à 10 % en poids, par rapport au poids total des monomères à insaturation éthylénique,
e3) et les nitriles à insaturation éthylénique, de préférence présents en une proportion de 0 à 15 % en poids, et de préférence de 0 à 10 % en poids, par rapport au poids total des monomères à insaturation éthylénique.

11. Latex de polymères conforme à l'une des revendications précédentes, dans lequel les tensioactifs non-ioniques sont choisis parmi les éthoxylates d'alkyle, les éthoxylates d'alkyl-phénol, les éthoxylates d'acide gras, les copolymères à blocs d'éthylèneglycol et de propylèneglycol, et les éthoxylates de tristyryl-phénol, et/ou les tensioactifs non-ioniques présentent un indice HLB de 17 à 18,5, et de préférence de 17 à 18, et/ou les tensioactifs non-ioniques se trouvent présents, dans le latex de polymères, en une proportion de 2 à 9 % en poids, de préférence de 2 à 8 % en poids et mieux encore de 2 à 7 % en poids, par rapport au poids total des monomères à insaturation éthylénique.

12. Latex de polymères conforme à l'une des revendications précédentes, qui contient en outre des tensioactifs anioniques.

13. Latex de polymères conforme à l'une des revendications précédentes, lequel latex de polymères ne contient pas de particules de type noyau/coque.

14. Matériau de construction, et de préférence, composition cimentaire, comprenant un latex de polymères conforme à l'une des revendications 1 à 13.

15. Utilisation d'un latex de polymères conforme à l'une des revendications 1 à 13 dans des matériaux de construction, et de préférence, dans des compositions cimentaires.
